# EUROPEAN PATENT APPLICATION

(11) **EP 2 164 146 A2**
(43) Date of publication of application: **17.03.2010**
(21) Application number: 09166080.3
(22) Date of filing: 22.07.2009
(51) Int. Cl.: H02H 3/33, H02H 1/04

(54) **Control apparatus and control method for residual current circuit breaker**

(30) Priority: 12.09.2008 CN 200810149407
(71) Applicant: Siemens Aktiengesellschaft, 80333 München (DE)
(72) Inventor: Bao, Zhang Yao, 201514, Shanghai (CN); Wang, Xiao Dong, 201514, Shanghai (CN); Xiong, Tao, 2000126 Shanghai (CN)

(57) **Abstract**

The present invention provides an apparatus for the control of a residual current circuit breaker, which comprises: an amplifying unit for receiving a detected electrical leakage sampling signal and outputting a first output signal after having amplified said electrical leakage sampling signal; a delay unit for outputting a second output signal in the case of receiving said first output signal, wherein after a predetermined time delay started from the receipt of said first output signal, said second output signal reaches a first predetermined value; a triggering unit for outputting a triggering signal for triggering the action of an actuating mechanism in said residual current circuit breaker in the case of said second output signal reaching the first predetermined value. The present invention further provides a method for the control of the residual current circuit breaker.

## Description

The present invention relates to a control apparatus and a control method for a residual current circuit breaker.

A residual current circuit breaker is used to control an actuating apparatus to cut off a circuit or send out an alarm signal when an electrical leakage current (or referred to as a residual current) is detected in a circuit.

The residual current circuit breaker commonly utilizes a detecting apparatus (for example, a zero-sequence current transformer, ZCT) to detect and obtain an electrical leakage sampling signal. Then, a control apparatus amplifies the electrical leakage sampling signal and compares the amplified sampling signal with a reference signal, when the amplified sampling signal reaches the level of the reference signal, the control apparatus outputs a triggering signal for triggering the action of the actuating mechanism (for example, a tripping device). In the prior art, the above functions, such as amplification, comparison of sampling signal and output of the triggering signal, of the control apparatus may be realized by employing an integrated circuit (for example, a chip M54123).

The residual current circuit breaker using the abovementioned control apparatus will generate the abovementioned control signal in the case an electrical leakage current occurring, so as to trigger the action of an actuating mechanism. However, in some circumstances of application, for example when electronic equipment is initiated, a temporary and inherent interference leakage current often occurs, and the abovementioned residual current circuit breaker which acts instantaneously is prone to take unnecessary actions in this case.

It is an object of the present invention to avoid unnecessary action in case of a temporary interference leakage current.

A control apparatus provided by the present invention for the residual current circuit breaker comprises: an amplifying unit for receiving the detected electrical leakage sampling signal and outputting a first output signal after having amplified the electrical leakage sampling signal; a delay unit, the input terminal of which is connected to the output terminal of said amplifying unit, said delay unit outputting a second output signal in the case of receiving said first output signal, wherein after a predetermined time delay started from the receipt of said first output signal, said second output signal reaches a first predetermined value; a triggering unit, the input terminal of which is connected to the output terminal of said delay unit, in the case of said second output signal reaching the first predetermined value, said triggering unit outputting a triggering signal for triggering the action of an actuating mechanism in said residual current circuit breaker.

As a particular embodiment, said delay unit comprises a charge-discharge circuit, the input terminal of which is connected to the output terminal of said amplifying unit, and said charge-discharge circuit is charged and outputs the second output signal when said first output signal is received, wherein, after a predetermined time delay started from the receipt of said first output signal, said second output signal reaches the first predetermined value, and said predetermined time delay is determined by the charging time of said charge-discharge circuit. Preferably, said charge-discharge circuit discharges when said first output signal disappears.

As another particular embodiment, said delay unit comprises: a signal amplifying circuit, the input terminal of which is connected to the output terminal of said amplifying unit, for amplifying said first output signal and then outputting a first intermediate signal; a charge-discharge circuit, the input terminal of which is connected to the output terminal of said signal amplifying circuit, and said charge-discharge circuit is charged when said first intermediate signal is received and outputs the second output signal, wherein, after a predetermined time delay started from the receipt of said first output signal, said second output signal reaches the first predetermined value, and said predetermined time delay is determined by the charging time of said charge-discharge circuit. Preferably, said charge-discharge circuit discharges when said first intermediate signal disappears.

Particularly, said charge-discharge circuit is realized by a RC charge-discharge circuit composed of a resistor and a capacitor.

As a particular embodiment, said amplifying unit and said triggering unit are realized by an integrated circuit used for the electrical leakage protection.

Preferably, the range of said predetermined time delay is 0 to 40 ms.

The control method provided by the present invention for the residual current circuit breaker comprises the following steps: receiving by an amplifying unit a detected electrical leakage sampling signal, and outputting a first output signal after having amplified said electrical leakage sampling signal; outputting by a delay unit a second output signal after having received said first output signal, wherein, after a predetermined time delay started from the receipt of said first output signal, said second output signal reaches a first predetermined value; and receiving by a triggering unit said second output signal and outputting, in the case of said second output signal reaching the first predetermined value, a triggering signal for triggering the action of an actuating mechanism in said residual current circuit breaker.

Particularly, said predetermined time delay is determined by the charging time of a charge-discharge circuit.

Preferably, the range of said predetermined time delay is 0 to 40 ms.

Another control apparatus provided by the present invention for the residual current circuit breaker comprises: an amplifying unit, for receiving a detected electrical leakage sampling signal, and outputting a first output signal after having said electrical leakage sampling signal amplified; a delay unit, the input terminal of which is connected to the output terminal of said amplifying unit, said delay unit outputs a second output signal in the case of said delay unit receiving said first output signal, wherein, after a predetermined time delay started from the receipt of said first output signal, said second output signal reaches a second predetermined value; a judging unit, which comprises two input terminals, wherein one input terminal is connected to the output terminal of said amplifying unit, and the other input terminal is connected to the output terminal of said delay unit; and when said judging unit receives the first output signal and the second output signal received by said judging unit reaches the second predetermined value, said judging unit outputs a third output signal which reaches the first predetermined value; and a triggering unit, the input terminal of which is connected to the output terminal of said judging unit, said triggering unit outputs, in the case of receiving said third output signal which reaches the first predetermined value, a triggering signal for triggering the action of an actuating mechanism in said residual current circuit-breaker.

As a particular embodiment, said delay unit comprises: a first stage charge-discharge circuit, the input terminal of which is connected to the output terminal of said amplifying unit, wherein said first stage charge-discharge circuit completes its charging when receiving said first output signal and outputs the second intermediate signal, and discharges when the first output signal disappears and outputs the second intermediate signal until the discharging is completed; a signal amplifying circuit, the input terminal of which is connected to the output terminal of said first stage charge-discharge circuit, for amplifying said received second intermediate signal and then outputting a third intermediate signal; and a second stage charge-discharge circuit, the input terminal of which is connected to the output terminal of said signal amplifying circuit, said second stage charge-discharge circuit is charged when receiving said third intermediate signal and outputs the second output signal, wherein, after a predetermined time delay started from the receipt of the first output signal, said second output signal reaches a second predetermined value, and said predetermined time delay is determined by the charging time of said second stage charge-discharge circuit.

Preferably, said second stage charge-discharge circuit is discharged when said third intermediate signal disappears.

Particularly, said first stage charge-discharge circuit and said second stage charge-discharge circuit are each realized by a RC charge-discharge circuit composed of a resistor and a capacitor.

Particularly, said judging unit is realized by an AND gate circuit.

As a particular embodiment, said amplifying unit and said triggering unit are realized by an integrated circuit which is used for the electrical leakage protection.

Preferably, the range of said predetermined time delay is 0 to 40 ms.

Another control method provided by the present invention for a residual current circuit breaker comprises the following steps: receiving by an amplifying unit a detected electrical leakage sampling signal, and outputting a first output signal after having amplified said electrical leakage sampling signal; outputting by a delay unit a second output signal after having received said first output signal, wherein, after a predetermined time delay started from the receipt of the first output signal, said second output signal reaches a second predetermined value; outputting by a judging unit a third output signal which reaches the first predetermined value when receiving said first output signal and the second output signal received by it having reached the second predetermined value; and outputting by a triggering unit, in the case of receiving said third output signal which reaches the first predetermined value, a trigger signal for triggering the action of an actuating mechanism in said residual current circuit breaker.

Particularly, said predetermined time delay is determined by the charging time of a charge-discharge circuit.

Preferably, the range of said predetermined time delay is 0 to 40 ms.

The apparatus for the control of a residual current circuit breaker of the present invention uses a delay unit, so that upon the detection of a leakage current sampling signal a triggering signal is outputted only after a predetermined time delay. In this way, it can avoid the unnecessary tripping action of a tripping mechanism caused by some interfering signals. Said delay unit can be realized simply by a charge-discharge circuit. The technical solution of the present invention can be readily realized on the basis of a control apparatus (for example, a control apparatus realized on the basis of an integrated circuit chip M54123) in an currently available residual current circuit breaker product, and therefore it can shorten the research and development period and save costs.

In an embodiment of the control apparatus of the present invention, one stage of a charge-discharge circuit that can be charged/discharged rapidly is further provided in the delay unit, and this makes it possible for the delay circuit to be able to control the time for the control apparatus to trigger the tripping mechanism quite definitely within a predetermined time range even if a relatively large fluctuation occurs in a signal outputted by the amplifying unit. At the same time, a judging unit composed of an AND gate circuit is also provided in this control apparatus, and only in the case of the signal outputted by the delay circuit reaching the second predetermined value and at the same time there still is an output signal from the amplifying unit, the judging unit outputs a signal that can cause the triggering unit to send out a triggering signal. This can avoid the maloperation of the tripping mechanism caused by some temporary interfering signals.

The control apparatus of the present invention can set different time delay ranges according to the requirements of practical applications. Preferably, in the case of setting the predetermined time delay within a range from 0 to 40 ms, the control apparatus of the present invention is particularly suitable in avoiding the unnecessary tripping actions by the residual current circuit breaker caused by temporary interference leakage currents.

### Description of the drawings

Fig. 1 is a schematic construction diagram of an apparatus for the control of a residual current circuit breaker of embodiment one of the present invention;
Fig. 2 is a schematic circuit structure diagram of an apparatus for controlling the residual current circuit breaker of embodiment two of the present invention;
Fig. 3 is a schematic construction diagram of a delay unit of the embodiment two of the present invention;
Fig. 4 is a schematic construction diagram of an apparatus for controlling the residual current circuit breaker of embodiment three of the present invention;
Fig. 5 is a schematic circuit structure diagram of an apparatus for controlling the residual current circuit breaker of embodiment four of the present invention; and
Fig. 6 is a schematic construction diagram of a delay unit of embodiment four of the present invention.

The present invention will be described in detail hereinbelow in conjunction with the drawings.

In order to cause a residual current circuit breaker, upon detecting a leakage current, to trigger the action of an actuating mechanism only after a predetermined time delay, the basic concept of the present invention is to provide a delay unit in a control apparatus of the residual current circuit breaker. Several particular implementations are as follows.

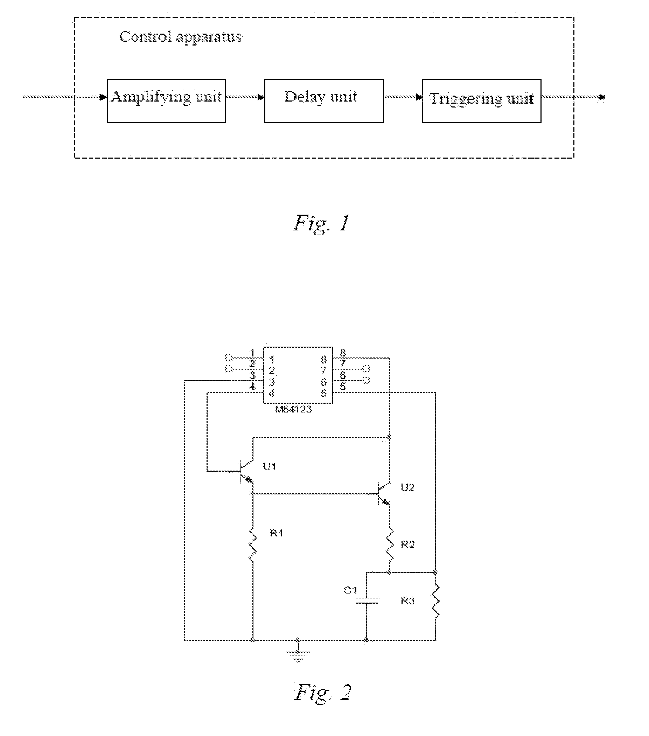

Fig. 1 provides a schematic construction diagram of an apparatus for controlling a residual current circuit breaker according to a first embodiment. The control apparatus comprises an amplifying unit, a delay unit and a triggering unit.

The amplifying unit is used to receive an electrical leakage sampling signal from a detecting apparatus of the residual current circuit breaker, and to output the electrical leakage sampling signal as a first output signal to the delay unit after having the electrical leakage sampling signal amplified.

The input terminal of the delay unit is connected to the output terminal of said amplifying unit. The delay unit outputs a second output signal in the case of receiving said first output signal, wherein, after a predetermined time delay started from the receipt of said first output signal, the second output signal reaches a first predetermined value.

Particularly, the delay unit can be realized particularly by employing a charge-discharge circuit. When the charge-discharge circuit receives said first output signal, it is charged and outputs a second output signal to the triggering unit. Since the charging process of the charge-discharge circuit can be completed only after a predetermined time delay, the second output signal reaches the first predetermined value only after a predetermined time delay determined by the charging time of the charge-discharge circuit started from the receipt of the first output signal. Preferably, the charge-discharge circuit discharges when the first output signal disappears.

The input terminal of the triggering unit is connected to the output terminal of the delay unit. The triggering unit compares the second output signal from the delay unit with the first predetermined value, and it outputs, in the case of the second output signal reaching the first predetermined value, a triggering signal (for example, a high electric level signal) for triggering the action of an actuating mechanism in the residual current circuit-breaker, for example triggering a tripping device to perform the tripping operation. While in the case of the second output signal from the delay unit being less than the first predetermined value, the triggering unit outputs a normal signal (for example, a low electric level signal), which will not trigger the action of the actuating mechanism.

In this embodiment, the control steps of the residual current circuit breaker performed by the control apparatus comprise the following:
1. The amplifying unit receives the detected electrical leakage sampling signal, and outputs the first output signal after having said electrical leakage sampling signal amplified.
2. The delay unit outputs the second output signal after having received the first output signal, wherein, after a predetermined time delay started from the receipt of the first output signal, the second output signal reaches the first predetermined value. In particular, said predetermined time delay is determined by the charging time of a charge-discharge circuit.
3. The triggering unit receives the second output signal and compares the second output signal with a first predetermined value, and outputs, in the case of said second output signal reaching the first predetermined value, a triggering signal for triggering the action of the actuating mechanism in the residual current circuit breaker.

A second embodiment is an example of a particular circuit implementation based on the first embodiment. Fig. 2 is a schematic circuit structure diagram of the second embodiment.

In this embodiment, a zero-sequence current transformer (ZCT) is employed in the detecting apparatus of the residual current circuit breaker. The electrical leakage sampling signal detected by the zero-sequence current transformer is outputted to the detecting apparatus of the residual current circuit breaker.

In this embodiment, the amplifying unit and triggering unit of the detecting apparatus are mainly realized by an integrated circuit chip M54123. In chip M54123, the amplifying unit is particularly implemented as a differential amplifier, and the triggering unit is particularly implemented as a latch circuit. Chip M54123 has 8 pins, wherein, pins 1 and 2 are input terminals of the differential amplifier; pin 3 is a ground terminal; pin 4 is an output terminal of the differential amplifier; pin 5 is an input terminal of the latch circuit; pin 6 is a noise suppression terminal; pin 7 is an output terminal of the latch circuit; and pin 8 is a power supply terminal.

After the differential amplifier has received an electrical leakage sampling signal from the zero-sequence current transformer via the pins 1 and 2 of M54123, it amplifies the electrical leakage sampling signal, and then outputs the first output signal via pin 4 of M54123.

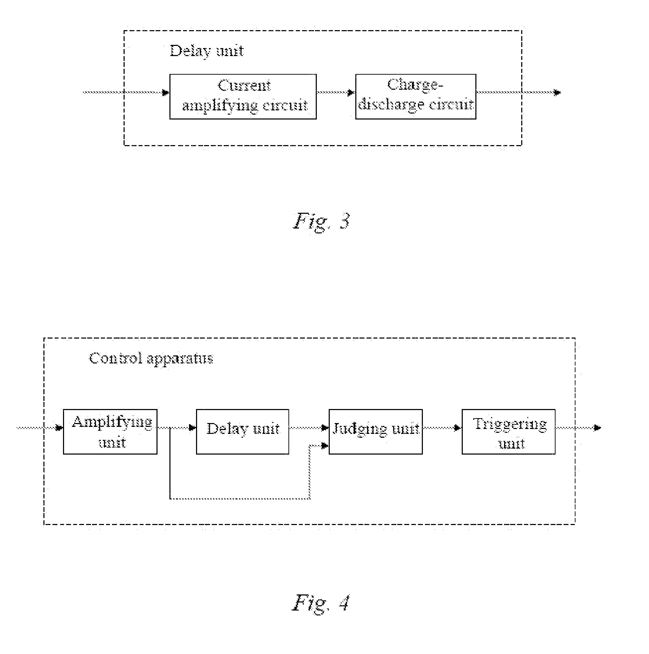

In this embodiment, the delay unit is particularly implemented as including a signal amplifying circuit and a charge-discharge circuit, as shown in Fig. 3.

The input terminal of the signal amplifying circuit is connected to the output terminal of the amplifying unit, for amplifying the first output signal from the amplifying unit, and then outputs a first intermediate signal to the charge-discharge circuit. In this example, the signal amplifying circuit is composed of two stages of triode amplifiers (namely, a triode U1 and its emitter resistor R1, and a triode U2), and the signal from the pin 4 of M54123 is inputted via the base electrode of the triode U1, and is outputted as the first intermediate signal from the emitter of the triode U2 after having been amplified by the triode U1 and the triode U2.

In this example, the charge-discharge circuit is an RC charge-discharge circuit composed of a capacitor C1 and its series resistor R2, and a parallel resistor R3. When the triode U2 outputs the first intermediate signal, the capacitor C1 starts to be charged via the resistor R2 connected in series with the emitter of the triode U2. Since the charging process needs to take a certain amount of time, the level of signal (namely, the second output signal outputted by the delay unit to the triggering unit) which is outputted by the RC charge-discharge circuit to pin 5 of M54123 increases gradually during the whole charging process, and can reach the first predetermined value only after the charging of the capacitor C1 is completed.

Pin 5 of M54123 receives the second output signal, and the latch circuit performs a comparison operation. If the electric level of the second output signal which is outputted by the RC charge-discharge circuit to pin 5 of M54123 is less than the first predetermined value, then the output terminal (namely, at pin 7 of M54123) of the latch circuit will output a low electric level signal; if the electric level of the second output signal which is outputted by the RC charge-discharge circuit to pin 5 of M54123 reaches the first predetermined value, then the output terminal (namely, pin 7 of M54123) of the latch circuit will output a high electric level signal.

This high electric level signal can trigger a thyristor rectifier switch element (not shown in the figure) connected to the output terminal of the latch circuit, so as to charge a tripping coil (not shown in the figure), and in turn to cause a tripping device (not shown in the figure) to perform a tripping action.

If the signal from pin 4 of M54123 disappears, then there is no signal outputted from the signal amplifying circuit. At this time, the capacitor C1 will be discharged via the resistor R3 connected in parallel with it. In this way, if an interference leakage signal is received again after a period of time, the tripping action will not be triggered immediately.

In this embodiment, the effect of the signal amplifying circuit is to amplify the signal from pin 4 of M54123, so as to provide a signal sufficient to drive the operation of subsequent circuits. If the signal from pin 4 of M54123 is large enough, then there is no need to set the signal amplifying circuit.

In the above embodiments, by setting the charge-discharge circuits and determining the time constants for the charge-discharge circuits, the amounts of time involved in completing the charge of the charge-discharge circuits can be preset, and the time delay of the delay unit of the control apparatus is preset correspondingly. Particularly for embodiment two, the time delay is determined by the time constant (namely, the product of resistance value of the resistor and capacitance value of the capacitor in the RC charge-discharge circuit) of the RC charge-discharge circuit.

For example, in order to aviod triggering the unnecessary tripping action of the residual current circuit breaker caused by a temporary leakage current that is generated when electronic equipment is initiated, generally it is necessary for the control apparatus of the residual current circuit breaker to have a short time delay within a range from 0 to 40 ms. In this case, the time constant of the charge-discharge circuit can be set correspondingly, so as to make the charging time of the charge-discharge circuit within the range from 0 to 40 ms, namely it is preferable to set the predetermined time delay of the delay unit in the control apparatus within the range from 0 to 40 ms. Preferably, since the period of a power signal is 20 ms, normally the typical value of the charging time of the RC charge-discharge circuit is set to 10 ms. In this way, only when an electrical leakage signal with a time duration exceeding 10 ms is detected, the action of the tripping mechanism is triggered, while for those interfering signals whose time duration is less than 10 ms, the action of the tripping mechanism will not be triggered.

In addition, it is also possible to set a longer charging time for the charge-discharge circuit, so as to realize a longer time delay.

Fig. 4 provides a schematic construction diagram of another apparatus for controlling the residual current circuit breaker according to a third embodiment.

The control apparatus comprises an amplifying unit, a delay unit, a judging unit and a triggering unit.

The amplifying unit is used to receive an electrical leakage sampling signal from a detecting apparatus of the residual current circuit breaker, and to output it as a first output signal to the delay unit after having amplified the electrical leakage sampling signal.

The input terminal of the delay unit is connected to the output terminal of said amplifying unit. The delay unit outputs a second output signal in the case of receiving said first output signal, wherein, the second output signal reaches a first predetermined value only after a predetermined time delay started from the receipt of said first output signal.

Particularly, the delay unit can be the one described in the first an second embodiment. However, it is preferable that the delay unit in this embodiment is realized by using two stages of the charge-discharge circuits, wherein, the first stage charge-discharge circuit is a fast charge-discharge circuit, and the second stage charge-discharge circuit is the charge-discharge circuit described in the first and second embodiment. When the first stage charge-discharge circuit receives the first output signal, its charging can be completed rapidly, and in turn cause the second stage charge-discharge circuit to be charged and to output the second output signal. While when the first output signal disappears, the first stage charge-discharge circuit discharges, and this allows the second stage charge-discharge circuit still to be charged during a period of time. In this case, upon completing the charging of the second stage charge-discharge circuit, it reaches the second predetermined value only after a predetermined time delay.

The judging unit comprises two input terminals, one of which is used to receive the first output signal from the amplifying unit, and the other one to receive the second output signal from the delay unit. When the judging unit receives the first output signal and the second output signal received by the judging unit reaches the second predetermined value, the judging unit outputs a third output signal which reaches the first predetermined value.

Particularly, the judging unit can be realized by an AND gate circuit.

The input terminal of the triggering unit is connected to the output terminal of the judging unit. In the case of receiving the third output signal which reaches the first predetermined value, the triggering unit outputs a triggering signal (for example, a high electric level signal) for triggering the action of the actuating mechanism in the residual current circuit-breaker, for example triggering the tripping device to perform the tripping operation. However, in the case of the received third output signal being less than the first predetermined value, the triggering unit outputs a normal signal (for example, a low level signal), which will not trigger the action of the actuating mechanism.

In the present embodiment, the control steps of the residual current circuit breaker performed by the control apparatus comprise the following:
1. The amplifying unit receives the detected electrical leakage sampling signal, and outputs the first output signal after having amplified said electrical leakage sampling signal.
2. The delay unit outputs the second output signal in the case of receiving the first output signal, wherein, after a predetermined time delay started from the receipt of the first output signal, the second output signal reaches the first predetermined value; in particular, said predetermined time delay is determined by the charging time of a charge-discharge circuit. Preferably, said predetermined time delay is set within a range from 0 to 40 ms.
3. When the judging unit receives the first output signal and the second output signal received by it reaches the second predetermined value, it outputs a third output signal which reaches the first predetermined value.
4. In the case that the triggering unit receives the third output signal which reaches the first predetermined value, it outputs a trigger signal for triggering the action of the actuating mechanism in the residual current circuit breaker.

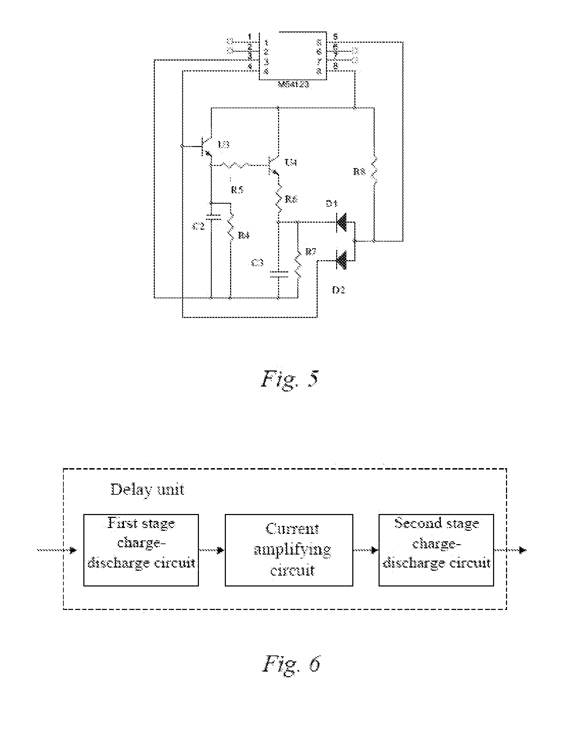

The fourth Embodiment is an example of a particular circuit implementation based on embodiment three. Fig. 5 is a schematic circuit structure diagram of embodiment four. In this embodiment, the amplifying unit and the triggering unit of the control apparatus are still realized by an integrated circuit chip M54123, as described in the first, second and third embodiment, and its operation process will not be described herewith redundantly.

The delay unit of the control apparatus comprises: a first stage charge-discharge circuit composed of a triode U3, a capacitor C2 and a parallel resistor R4; a signal amplifying circuit composed of a triode U4 and its base resistor R5; and a second stage charge-discharge circuit composed of a capacitor C3, a series resistor R6 and a parallel resistor R7.

The input terminal of the first stage charge-discharge circuit is connected to the output terminal (pin 4 of M54123) of the amplifying unit. A small capacitance is used for the capacitor C2 of the first stage charge-discharge circuit, and after the triode U3 has received the first output signal from the amplifying unit, the signal outputted by its emitter causes the charging of capacitor C1 connected in series with its emitter to be completed instantaneously, and outputs a second intermediate signal. Then, after the signal amplifying circuit composed of triode U4 and resistor R5 has amplified the second intermediate signal from the first stage charge-discharge circuit, a third intermediate signal is outputted, so as to perform the charging on the capacitor C3 by the resistor R6 of the second stage charge-discharge circuit, and at the same time the second charge-discharge circuit stage outputs the second output signal. Since it takes a predetermined time delay for the charging process of the second stage charge-discharge circuit to be completed, the second output signal reaches the second predetermined value only after a predetermined time delay determined by the charging time of the second stage charge-discharge circuit started from the receipt of the first output signal by the delay unit. When the first output signal disappears, the first stage charge-discharge circuit starts discharging, and outputs the second intermediate signal until the discharging is completed, and this makes it possible for the second stage charge-discharge circuit to be still chargeable within a period of time. The second stage charge-discharge circuit discharges when said third intermediate signal disappears.

The abovementioned second output signal is further sent to the judging unit. The judging unit is realized by an AND gate circuit. In this embodiment, the AND gate circuit comprises diodes D1, D2 and a resistor R8. In this case, the negative pole of the diode D2 is connected to pin 4 of chip M54123, for receiving the first output signal from the amplifying unit, and the negative pole of the diode D1 is connected to the output terminal of the second stage charge-discharge circuit in the delay unit, for receiving the second output signal from the delay unit. When the negative pole of the diode D2 receives the first output signal from pin 4 of chip M54123 and the second output signal from the output terminal of the second stage charge-discharge circuit received by the negative pole of the diode D1 reaches the second predetermined value (namely, this is the equivalent of two input terminals of the AND gate ciruit both receiving high electric level signals), the AND gate circuit outputs a third output signal which reaches the first predetermined value to the input terminal (pin 5 of M54123) of the triggering unit (namely, this is the equivalent of the AND gate circuit outputting a high electric level signal).

In this embodiment, the first stage charge-discharge circuit that can be charged rapidly is provided in the delay unit of the control apparatus, and the charging of the first stage charge-discharge circuit can be completed instantaneously when the first output signal is received, in turn causing the second stage charge-discharge circuit to charge. While, when the first output signal disappears, the first stage charge-discharge circuit discharges, and outputs the second intermediate signal until the discharging is completed, and this causes the second stage charge-discharge circuit to still be charged during a period of time. In this way, even in the case of a relatively large fluctuation occurring in the first output signal (for example, due to signal distortion or interruption) the delay circuit can still control the time for triggering the tripping mechanism of the control apparatus quite definitely within a predetermined range (for example from 0 to 40 ms). At the same time, a judging unit composed of an AND gate circuit is also provided in the control apparatus, and only in the case of the second output signal reaching the second predetermined value and at the same time the first output signal still being present, does the judging unit send out a third output signal which reaches the first predetermined value to the triggering unit, and in this way it can better avoid the maloperation of the tripping mechanism caused by some temporary interfering signals.

The control apparatus of the residual current circuit breaker based on embodiment three and embodiment four can achieve the following technical effects: when a leakage current signal occurs, the residual current circuit breaker does not act immediately, but instead after a predetermined time delay, the tripping mechanism of the residual current circuit breaker is triggered to act only when a second leakage current signal occurs (namely, the occurance of the leakage current signal continues). In this way, it can avoid the maloperation of the circuit breaker caused by an inherent leakage current when electronic equipment is initiated.

Although the above embodiments of the present invention provide the exemplary particular circuit implementations, those skilled in the art can understand that, the function units that are needed to realize the present invention can also be implemented by other particular circuit implementations, for example, chip M54123 in the above embodiments can be replaced by other integrated circuit chips for leakage current protection, such as M54123L, VG54123, M54122L, M54133FP, IL7101, GL7101, etc. Furthermore, other electronic components can also be used to realize the circuits in the embodiments of the present invention, for example, the relevant functions of embodiments of the present invention can also be realized by using NPN triodes or field effect transistors. In addition, the control apparatus of the present invention, especially the delay unit and judging unit, can be realized both by using discrete electronic components and by using the integrated circuits.

Therefore, the above embodiments are merely the preferred embodiments of the present invention, and they are not intended to limit the protective scope of the present invention. Any modification, equivalent substitution and improvement within the spirit and principles of the present invention are to be covered in the protective scope of the present invention.

## Claims

1. An apparatus for the control of a residual current circuit breaker, comprising:
an amplifying unit for receiving a detected electrical leakage sampling signal and outputting a first output signal after having amplified said electrical leakage sampling signal;
**characterized in that** said control apparatus further comprises:
a delay unit, the input terminal of which is connected to the output terminal of said amplifying unit, said delay unit outputting a second output signal in the case of receiving said first output signal, wherein after a predetermined time delay started from the receipt of said first output signal, said second output signal reaches a first predetermined value; and
a triggering unit, the input terminal of which is connected to the output terminal of said delay unit, in the case of said second output signal reaching the first predetermined value, said triggering unit outputting a triggering signal for triggering the action of an actuating mechanism in said residual current circuit breaker.

2. The control apparatus as claimed in claim 1, **characterized in that** said delay unit comprises a charge-discharge circuit, the input terminal of which charge-discharge circuit is connected to the output terminal of said amplifying unit, and said charge-discharge circuit is charged and outputs the second output signal when said first output signal is received, wherein, after a predetermined time delay started from the receipt of said first output signal, said second output signal reaches the first predetermined value, and said predetermined time delay is determined by the charging time of said charge-discharge circuit.

3. The control apparatus as claimed in claim 2, **characterized in that** said charge-discharge circuit discharges when said first output signal disappears.

4. The control apparatus as claimed in claim 1, **characterized in that** said delay unit comprises:
a signal amplifying circuit, the input terminal of which is connected to the output terminal of said amplifying unit for amplifying said first output signal and then outputting a first intermediate signal; and
a charge-discharge circuit, the input terminal of which is connected to the output terminal of said signal amplifying circuit, said charge-discharge circuit is charged when receiving said first intermediate signal and outputs the second output signal, wherein, after a predetermined time delay started from the receipt of said first output signal, said second output signal reaches the first predetermined value, and said predetermined time delay is determined by the charging time of said charge-discharge circuit.

5. The control apparatus as claimed in claim 4, **characterized in that** said charge-discharge circuit discharges when said first intermediate signal disappears.

6. The control apparatus as claimed in any one of claims 1 to 5, **characterized in that** said amplifying unit and said triggering unit are realized by an integrated circuit used for electrical leakage protection.

7. A control method for a residual current circuit breaker, comprising the following steps:
receiving by an amplifying unit a detected electrical leakage sampling signal, and outputting a first output signal after having amplified said electrical leakage sampling signal;
**characterized by**
outputting by a delay unit a second output signal after having received said first output signal, wherein, after a predetermined time delay started from the receipt of said first output signal, said second output signal reaches a first predetermined value; and
receiving by a triggering unit said second output signal and outputting, in the case of said second output signal reaching the first predetermined value, a triggering signal for triggering the action of an actuating mechanism in said residual current circuit breaker.

8. The control method as claimed in claim 7, **characterized in that** said predetermined time delay is determined by the charging time of a charge-discharge circuit.

9. A control apparatus for a residual current circuit breaker, comprising:
an amplifying unit for receiving a detected electrical leakage sampling signal and outputting a first output signal after having amplified said electrical leakage sampling signal;
**characterized in that** said control apparatus further comprises:
a delay unit, the input terminal of which is connected to the output terminal of said amplifying unit, said delay unit outputs a second output signal in the case that said delay unit receives said first output signal, wherein, after a predetermined time delay started from the receipt of said first output signal, said second output signal reaches a second predetermined value;
a judging unit, which comprises two input terminals, wherein one input terminal is connected to the output terminal of said amplifying unit, and the other input terminal is connected to the output terminal of said delay unit; and when said judging unit receives the first output signal and the second output signal received by said judging unit reaches the second predetermined value, said judging unit outputs a third output signal which reaches the first predetermined value; and
a triggering unit, the input terminal of which is connected to the output terminal of said judging unit, said triggering unit outputs, in the case of receiving said third output signal which reaches the first predetermined value, a triggering signal for triggering the action of an actuating mechanism in said residual current circuit-breaker.

10. The control apparatus as claimed in claim 9, **characterized in that** said delay unit comprises:
a first stage charge-discharge circuit, the input terminal of which is connected to the output terminal of said amplifying unit, wherein said first stage charge-discharge circuit completes its charging when receiving said first output signal and outputs the second intermediate signal, and discharges when the first output signal disappears and outputs the second intermediate signal until the discharging is completed;
a signal amplifying circuit, the input terminal of which is connected to the output terminal of said first stage charge-discharge circuit, for amplifying said received second intermediate signal and then outputting a third intermediate signal; and
a second stage charge-discharge circuit, the input terminal of which is connected to the output terminal of said signal amplifying circuit, said second stage charge-discharge circuit is charged when receiving said third intermediate signal and outputs the second output signal, wherein, after a predetermined time delay started from the receipt of the first output signal, said second output signal reaches a second predetermined value, and said predetermined time delay is determined by the charging time of said second stage charge-discharge circuit.

11. The control apparatus as claimed in claim 10, **characterized in that** said second stage charge-discharge circuit discharges when said third intermediate signal disappears.

12. The control apparatus as claimed in any of claims 9 to 11, **characterized in that** said judging unit is realized by an AND gate circuit.

13. The control apparatus as claimed in any one of claims 9 to 12, **characterized in that** said amplifying unit and said triggering unit are realized by an integrated circuit which is used for the electrical leakage protection.

14. A control method for a residual current circuit breaker, comprising the following steps:
receiving by an amplifying unit a detected electrical leakage sampling signal, and outputting a first output signal after having amplified said electrical leakage sampling signal;
**characterized by**
outputting by a delay unit a second output signal after having received said first output signal, wherein, after a predetermined time delay started from the receipt of the first output signal, said second output signal reaches a second predetermined value;
outputting by a judging unit a third output signal which reaches the first predetermined value when receiving said first output signal and the second output signal received by it having reached the second predetermined value; and
outputting by a triggering unit, in the case of receiving said third output signal which reaches the first predetermined value, a trigger signal for triggering the action of an actuating mechanism in said residual current circuit breaker.

15. The control method as claimed in claim 14, **characterized in that** said predetermined time delay is determined by the charging time of a charge-discharge circuit.
